# EUROPEAN PATENT SPECIFICATION

(11) **EP 2 836 014 B1**
(45) Date of publication and mention of the grant of the patent: **14.06.2017**
(21) Application number: 13306137.4
(22) Date of filing: 08.08.2013
(51) Int. Cl.: H04W 36/06, H04W 8/26, H04W 24/02

(54) **Operating a cell**
Betrieb einer Zelle
Faire fonctionner une cellule

(43) Date of publication of application: 11.02.2015
(73) Proprietor: ALCATEL LUCENT, 92100 Boulogne-Billancourt (FR)
(72) Inventor: Helmers, Hakon, 91620 Nozay (FR); Baker, Matthew, Swindon, Wiltshire WI SN5 7DJ (GB); Hu, Teck, Melbourne, FL 32940 (US)
(74) Representative: Renoult, Adrien

(56) References cited:
- US-A1- 2005 085 265
- US-A1- 2006 105 771
- US-B1- 6 181 276

## Description

### Technical Field

The present invention relates to the field of cells for serving at least one user equipment. Particularly, the invention relates to E-UTRAN cells.

### Background

E-UTRAN cells result from a controlling E-UTRAN NodeB (eNB) transmitting/receiving radio signals to/from a given geographical area (cell coverage area) at a given frequency. The E-UTRAN cell is identified by a globally unique identifier (E-UTRAN Cell Global Identifier) as well as an identifier on the physical layer (Physical Cell Identifier). The cell identifiers typically also identify at least a portion of the transmission parameters of the cell. The eNB forms the hardware that is connected to the mobile phone network that communicates directly with the mobile handsets (hereafter referred to as user equipment UE).

In conventional cells, the ANR (Automatic Neighbour Relation) feature assumes that a given cell has a given set of neighbour cells. The ANR feature comprises detecting and automatically creating logical adjacency relations towards these neighbours and also, particularly in complex deployments like dense urban areas, to provide means to filtering out "overshooting" neighbour cells to which a logical adjacency relation shall not be created. This function assumes a certain degree of stability with respect to the neighbour relations.

Likewise the MRO (Mobility Robustness Optimisation) function assumes a cell being linked to a given geographical area and at the same time to have a given set of neighbour cells. On this basis the MRO feature enables automatic corrective actions by adjustment of the handover borders, for the purpose of reduction of the connection failure rate linked to UE mobility between cells.

An operator collecting data related to radio conditions and service quality, and possibly also UE location data obtained by e.g. satellite positioning methods (GNSS), using the MDT feature (Minimization of Drive Tests), will also assume a cell being linked to a given geographical area for the analysis of the collected data. Finally, a coarse and simple method to obtain a UE's geographical position is to identify the cell the UE camps on (in RRC-idle mode) or is connected to (in RRC-connected mode).

US2006/0105771 describes a method and system for wireless communication in a sectored system. US2005/0085265 describes a method and apparatus for improving inter-cell handoffs in a multi-carrier wireless communication system. US6181276 describes a sector shaping transition system and method.

A drawback of the known cells and the known methods for operating cells is that the many standardized functions (such as ANR, MRO and MDT) require substantially constant cell parameters. This reduces cell optimization possibilities without compromising correct operation of these standardized functions.

It is an object of the present invention to provide a method for operating a cell, and a cell for serving at least one user equipment, that allows cell optimization without compromising correct operation of some existing standardized functions.

### Summary

To this end, the invention provides a method for operating a cell, the method comprising:
- operating the cell with a first cell ID serving at least one user equipment;
- emulating a further cell with a second cell ID on the cell;
- handing over the at least one user equipment from the first cell ID to the second cell ID;
- cease transmitting via the first cell ID.

The invention proposes to emulate a further cell on the operated cell, wherein the further cell has a second cell ID while the cell has (initially) a first cell ID. Thereby, the standardized functions that are intended to assure correct functioning of the cells and correct serving of the User Equipments, will operate as if the cell and the further cell are different entities. Thereby, the standardized functions are not compromised when new functionalities that modify the cell parameters are applied. Because the further cell has a second cell ID, this further cell can be given any desirable cell parameters. User equipment can be handed over from the first cell ID to the second cell ID via conventional handing over procedures. After the User Equipments have been handed over, transmission via the first cell ID can be ceased so that the cell is eventually solely operating with the second cell ID. In this manner, the cell parameters can be optimized by creating a new cell ID having the optimized parameters.

Preferably each of the first and second cell ID defines cell transmission parameters. More preferably the cell transmission parameters comprise a geographical coverage parameter and the second cell ID represents a different geographical coverage than the first cell ID. This allows to adapt the geographical coverage of the cell not by amending the cell parameters (this would compromise correct operation of the standardized functions) but by creating a new cell ID comprising the new geographical coverage parameters. Thereby, the method for operating a cell is a method permitting adaptation of the geographical coverage of a cell.

Preferably the first cell ID is defined by a first E-UTRAN Cell Global Identifier (ECGI A) and a first Physical Cell Identifier A' (PCI A') and the second cell ID is defined by a second E-UTRAN Cell Global Identifier (ECGI B) and a second Physical Cell Identifier B' (PCI B'). By providing different physical cell identifier and E-UTRAN Cell global identifiers, the standardized features will handle the first cell ID and second cell ID as different cells. This allows the standardized procedures, for example handover procedure, to be executed in a conventional manner. As an alternative to this feature, the first cell ID is defined by a first E-UTRAN Cell Global Identifier (ECGI A) and a first Physical Cell Identifier A' (PCI A') and the second cell ID is defined by a second Physical Cell Identifier B' (PCI B') without radio transmission of the second E-UTRAN Cell Global Identifier.

Preferably the further cell with the second cell ID is emulated on the cell while the first cell ID is operated so that the first cell ID and the second cell ID are simultaneously operated by the cell. Because the first cell ID and the second cell ID are simultaneously operated, the User Equipments served by the first cell ID can be handed over to the second cell ID in a conventional manner, whereby data connection is optimized during the handover. As a result, the User Equipment is optimally served while the cell changes transmission parameters. Furthermore, the User Equipment is served via conventional standardized functions.

Preferably said emulating comprises starting transmitting at the cell in the name of a second cell ID thereby emulating the further cell. At the moment the cell starts transmitting in the name of the second cell ID, the first cell ID is serving the User Equipments. Since it is generally assumed that a cell can only have one cell ID, a second cell is emulated by the starting of transmission via the second cell ID.

In one embodiment, the cell comprises a plurality of power amplifiers, wherein one of the first and second cell ID is configured so that a number N of the plurality of power amplifiers is used to operate the cell, while the other of the first and second cell ID is configured so that a number M of the plurality of power amplifiers is used to operate the cell, wherein N is different from M. Amending the power amplifier use can be done for multiple reasons. In one embodiment of the invention, the power consumption of the cell is adapted to a more optimal power consumption that corresponds to an actual network condition and network load (up/down-tilt of the antenna and/or power adjustment within a single sector). In another embodiment of the invention, sectors are merged or splitted (using active antenna arrays). The use of the power amplifiers is determining for the geographical coverage and/or for the capacity of the cell. As an example, M can be 3 and N can be 1, in this example 2 of the 3 amplifiers are turned off. In another example, M can be 0,5 and N can be 1, in this example the amplifying power of an amplifier is increased from half to full power. An alternative method for amending the geographical coverage of the cell is by up/down-tilting of the antenna's of the cell, thereby pointing the antenna's to transmit into another direction.

Preferably the step of cease transmitting via the first cell ID comprises continuing transmitting via the second cell ID. This ensures that the user equipments are correctly served.

The invention further relates to a cell for serving at least one user equipment, the cell comprising:
- an antenna provided for operating the cell with a first cell ID serving the at least one user equipment;
- a processor operationally connected to the antenna and provided for emulating a further cell with a second cell ID on the cell;
- a controller provided for handing over the at least one user equipment from the first cell ID to the second cell ID.

With the cell of the invention, it is possible to change the cell parameters while the standardized functions can maintain their normal operation. This is achieved by the processor emulating a further cell on the cell having a second cell ID, and the controller handing over the user equipments to this second cell ID. Thus the parameters of the cell are not merely changed into the optimal parameters, but a new cell ID is created representing these optimal parameters.

Preferably, the cell further comprises a switch for switching the cell operation from the first cell ID to the second cell ID. Thereby, the cell is operated with the optimal parameters (that correspond to the second cell ID).

### Brief description of the figures

Some embodiments of apparatus and/or methods in accordance with embodiments of the present invention are now described, by way of example only, and with reference to the accompanying drawings, in which:
figure 1 illustrates an example wherein the geographical coverage of a cell is adapted.
figure 2 illustrates the steps of an embodiment of the invention executed in a cell.

### Detailed description of embodiments

The present invention is operable as part of energy saving solutions for the E-UTRAN coverage layer, where a solution based on cell coverage compensation is under study for 3GPP Rel-12. Use of the described method can allow current standardized features to be used, for example the coverage compensation feature, relating to ANR (Automatic Neighbour Relation; defined in 3GPP TS 36.300, incorporated herein by reference for the purpose of understanding ANR) and MRO (Mobility Robustness Optimisation; TS 36.300 subsection 22.4.2, incorporated herein by reference for the purpose of understanding MRO) features, and possibly positioning services.

In geographical areas wherein use of mobile network fluctuates, it might be economical to switch on/off certain cells to optimize power consumption of the cells based on the actual network load. Significant modification of the cell coverage, as needed to compensate for a switched-off cell, will create a new set of neighbours to which an adjacency relation shall be made, and hence break with a fundamental assumption of stable neighbour relations. Therefore any significant change of the geographical coverage area of the cell may and probably will lead to incorrect corrective actions.

The technical problem solved by the invention is to introduce a cell coverage compensation solution without impact or with minimal impact on legacy standards and implementations of features relaying on certain cell properties, in particular relatively stable adjacency relations and geographical footprint (coverage area).

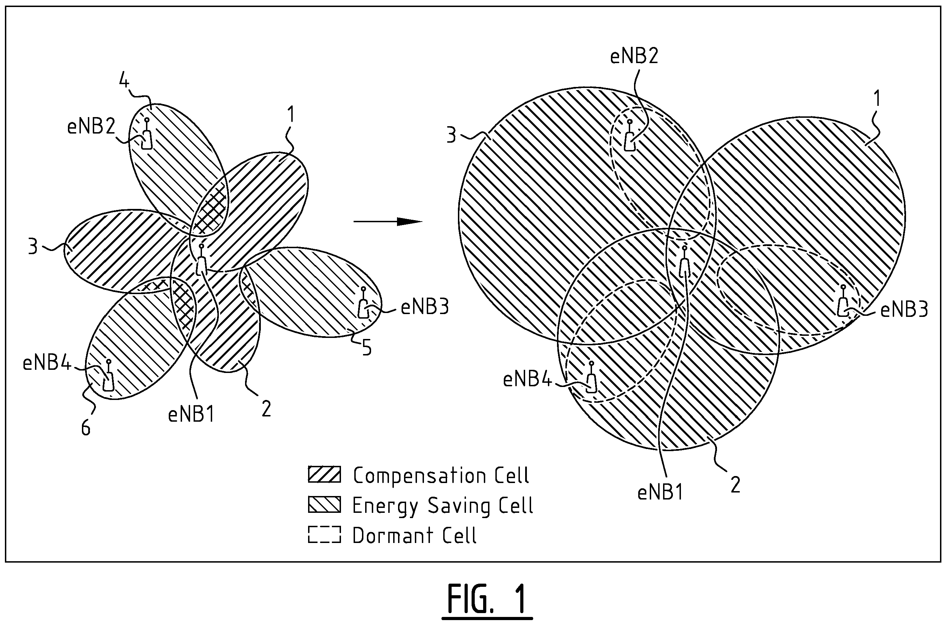

As shown in figure 1, energy saving methods based on cell coverage compensation will necessarily significantly modify the geographical footprint of a cell, and hence also its adjacency relations. The figure shows on the left hand side a situation where the cells are configured to serve a dense and large amount of user equipments. In the center, the main cell (eNB1) is shown. To be able to serve the large amount of user equipments (left hand side of the figure), additionally to the main cell eNB1, three further cells eNB2, eNB3 and eNB4 are operating transmitting respectively in directions 4, 5 and 6. Because these further cells are operating, the direction in which the main cell eNB1 transmits is more specific and directed to the areas 1, 2 and 3 between the further cells. The right hand side of the figure shows a situation wherein a small amount of user equipments is to be served. This small amount of user equipments do not require all cells to be operative. Therefore the further cells eNB2, eNB3 and eNB4 are shut down (cease transmitting). As a result, the main cell eNB1 should not only cover the areas between the further cells (as shown on the left hand side of the figure) but should cover the complete area around the main cell eNB1. This significantly changes the geographical coverage of the main cell eNB1 and thereby also changes the neighbourhood of the main cell eNB1.

Another cell coverage compensation solution (not shown) is modification of eNB sectorisation. At peak hours an eNB may need to use 3 120° sectors, and hence 3 power amplifiers. At off-peak hours the eNB could use a single 360° sector, and be able to switch off 2 of 3 power amplifiers.

In order to avoid or limit standards and implementations impact as a consequence of the cell coverage compensation solution as explained above the invention provides that the re-configured cell appears as a different cell (for example a different Physical Cell Identity PCI and a different E-UTRAN Cell Global Identifier ECGI). This approach will permit legacy features to keep current assumptions about the mentioned cell properties. Backwards compatibility can then be achieved by handling two distinct sets of static or semi-static cell information for a given geographical area. The present invention further provides service continuity for UEs in RRC-connected mode.

Without emulation of a further cell on the cell, the further cell having a second cell ID and the user equipment being handed over from the first cell ID (of the cell) to the second cell ID, the simplest way to change cell coverage would be not to support service continuity for UEs in RRC-connected mode, but disconnect the UEs and let them reconnect after the energy saving state transition. While this method could be acceptable for "best effort" packet data services, it is not acceptable for services like voice calls and real-time video.

Another way to change cell coverage without emulating as in the present invention, while still ensuring service continuity for UEs in RRC-connected mode, might be to handover concerned UEs to a different carrier during the reconfiguration. While this would be workable for coverage reconfigurations based on antenna power, this would not work if the chosen reconfiguration technique includes up/down-tilting of the antenna, which would for a classic antenna apply for all carriers. Another drawback of this approach is that the operator would need to have licence for a second carrier, and sufficient available capacity on this carrier. Available capacity could be a problem in particular when the network needs to transit from energy saving mode to normal mode due to traffic increase.

The present invention proposes a method to change the cell identities (PCI/ECGI) of an active cell while maintaining UEs in connected mode based on the emulation of a second cell during a transition period and handovers of UEs in connected mode from the original cell to the emulated cell. The eNB then stops transmitting information related to the original cell, but continues transmitting information related to the second cell.

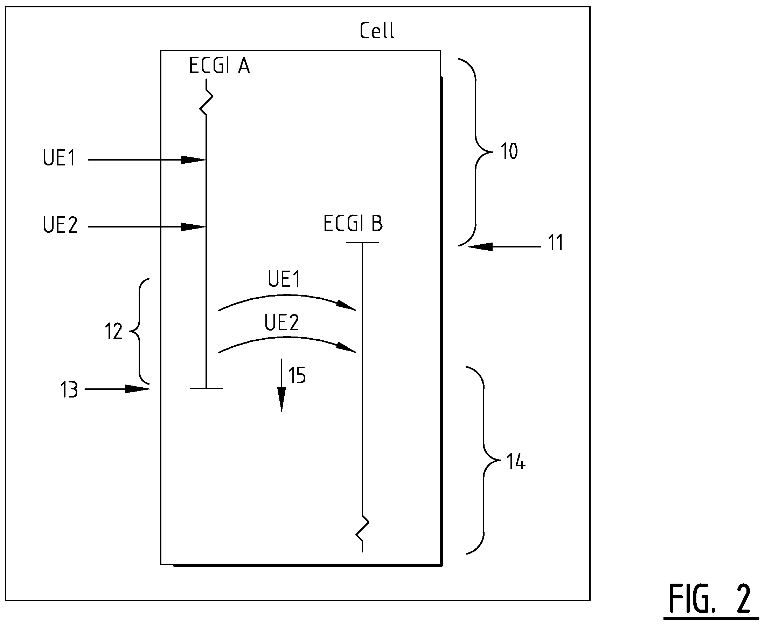

In one embodiment of the method, illustrated in figure 2, a switch is made from cell ID A (PCI A / ECGI A) to cell ID B (PCI B / ECGI B). The figure shows a Cell and shows, in the cell, a timeline illustrating the operational steps executed in the cell. Thereby the method illustrated in figure 2 comprises the following steps:
- Stationary operation 10 of the cell. The cell transmits ECGI A. ECGI A is transmitted in SIB1 (System Information Block 1, defined in TS 36.331, incorporated herein by reference for the purpose of explaining SIB). PSS (Primary Synchronization Signal, defined in TS 36.101, incorporated herein by reference for the purpose of explaining PSS), SSS (Secondary Synchronization Signal, defined in TS 36.101, incorporated herein by reference for the purpose of explaining SSS) (PSS and SSS being signals sent by the eNB that are needed to establish synchronization between the UE and the network) and CRS (Cell-specific Reference Signal, defined in TS 36.300, incorporated herein by reference for the purpose of explaining CRS) are all based on PCI A (Physical Cell Identity). During this operation of the cell, a first user equipment UE1 and a second user equipment UE2 can connect to the cell to be served by the cell.
- Start 11 of emulation of a second cell on the same carrier and in the same sector: CRS (Cell-specific Reference Signal) is based on PCI B (modulo 3 or modulo 6 frequency shift). Subframe shift permits nonoverlapping PSS and SSS. A second set of SIBs transmits information related to the emulated cell, including ECGI B.
- As part of normal legacy UE measurements the served UEs (UE1 and UE2) (RRC-connected mode) will detect the intra-frequency cell B (ECGI B), and report this cell to the eNB (ECGI A).
- The eNB (ECGI A) can then perform normal intra-frequency handover 15 of all UEs from cell A (ECGI A) to cell B (ECGI B).
- The eNB (ECGI A) can cease transmitting 13 information related to cell ID A (SIBs, CRS, PSS, SSS). Meanwhile the transmission of cell ID B (ECGI B) continues during the further time period 14 so that the User Equipments UE1 and UE2 remain served by the cell via the ECGI B.

The point in time at which the physical change of cell coverage takes places (RF power adjustment, up/down-tilt) can be left to implementation. For example, this can be done simultaneously with the start of emulation step. Another option is to do this simultaneously with the cease transmitting step.

In the execution of the method of the invention, frequency shifting can be used to avoid overlapping CRS. Furthermore, subframe shifting can be used to avoid overlapping PSS and SSS.

According to the invention, the standardisation and implementation of energy saving solution for E-UTRAN coverage layer based on cell coverage compensation is permitted while avoiding or limiting a series of problems related to other legacy features (in particular ANR and MRO, possibly also MDT and UE localisation based on cell ID). Therefore, by applying the invention, use of a second carrier, or call drops during energy saving state transitions can be avoided.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for adjusting transmission parameters of a cell (eNB1), the method comprising:
- operating the cell (eNB1) with a first cell ID, defining a first set of transmission parameters, and serving at least one user equipment (UE1, UE2);
- starting transmitting at the cell in the name of a second cell ID, the second cell ID defining a second set of transmission parameters different from the first set,;
- simultaneously operating, during a transition period (12), the first cell ID and the second cell ID;
- handing over all of the at least one user equipment (UE1, UE2) from the first cell ID to the second cell ID;
- stop transmitting with the first cell ID after the at least one user equipment has been handed over.

2. Method according to claim 1, wherein the cell transmission parameters comprise a geographical coverage parameter and the second cell ID represents a different geographical coverage than the first cell ID.

3. Method according to claim 2, wherein the method for operating a cell is a method for adapting the geographical coverage of a cell.

4. Method according to any one of the previous claims, wherein the cell is controlled by an E-UTRAN Node B, eNB.

5. Method according to any one of the previous claims, wherein the first cell ID is defined by a first E-UTRAN Cell Global Identifier, ECGI A, and a first Physical Cell Identifier A', PCI A', and the second cell ID is defined by a second E-UTRAN Cell Global Identifier, ECGI B, and a second Physical Cell Identifier B', PCI B'.

6. Method according to any one of the previous claims, wherein the cell comprises a plurality of power amplifiers, wherein one of the first and second cell ID is configured so that a number N of the plurality of power amplifiers is used to operate the cell, while the other of the first and second cell ID is configured so that a number M of the plurality of power amplifiers is used to operate the cell, wherein N is different from M.

7. Method according to any one of the previous claims, wherein the step of stop transmitting via the first cell ID comprises continuing transmitting via the second cell ID.

8. Cell (eNB1) for serving at least one user equipment (UE1, UE2), the cell comprising:
- an antenna provided for operating the cell with a first cell ID, defining a first set of transmission parameters, and serving the at least one user equipment;
- a processor operationally connected to the antenna and provided for starting transmitting at the cell in the name of a second cell ID, the second cell ID defining a second set of transmission parameters different from the first set, such that during a transition period, the first cell ID and the second cell ID are simultaneously operated;
- a controller provided for handing over all of the at least one user equipment from the first cell ID to the second cell ID
- wherein the processor is further provided for stopping transmitting with the first cell ID after the at least one user equipment has been handed over.

9. Cell according to claim 8, further comprising a switch for switching the cell operation from the first cell ID to the second cell ID.

10. Cell according to claims 8 or 9, wherein the cell comprises a plurality of power amplifiers, wherein one of the first and second cell ID is configured so that a number N of the plurality of power amplifiers is used to operate the cell, while the other of the first and second cell ID is configured so that a number M of the plurality of power amplifiers is used to operate the cell, wherein N is different from M.

11. Cell according to any one of the claims 8-10, wherein the cell is controlled by an E-UTRAN Node B, eNB.

## Patentansprüche

1. Verfahren zum Anpassen von Übertragungsparametern einer Zelle (eNB1), wobei das Verfahren umfasst:
- das Betreiben der Zelle (eNB1) mit einer ersten Zell-ID, die einen ersten Satz von Übertragungsparametern definiert, und das Bedienen mindestens eines Benutzergeräts (UE1, UE2);
- das Starten der Übertragung an der Zelle im Namen einer zweiten Zell-ID, wobei die zweite Zell-ID einen zweiten Satz von Übertragungsparametern definiert, der sich vom ersten Satz unterscheidet;
- für einen Übergangszeitraum (12) das simultane Betreiben der ersten Zell-ID und der zweiten Zell-ID;
- die Übergabe aller bzw. des mindestens einen Benutzergeräts (UE1, UE2) von der ersten Zell-ID an die zweite Zell-ID;
- das Einstellen der Übertragung mit der ersten Zell-ID, nachdem das mindestens eine Benutzergerät übergeben wurde.

2. Verfahren nach Anspruch 1, wobei die Zell-Übertragungsparameter einen Parameter für die geografische Abdeckung umfassen und wobei die zweite Zell-ID eine andere geografische Abdeckung repräsentiert als die erste Zell-ID.

3. Verfahren nach Anspruch 2, wobei das Verfahren zum Betrieb einer Zelle ein Verfahren um Anpassen der geografische Abdeckung einer Zelle ist.

4. Verfahren nach einem jeglichen der vorgenannten Ansprüche, wobei die Zelle von einem E-UTRAN-NodeB (eNB) gesteuert wird.

5. Verfahren nach einem jeglichen der vorgenannten Ansprüche, wobei die erste Zell-ID von einer ersten globalen E-UTRAN Zellkennung (E-UTRAN Cell Global Identifier, ECGI A) und einer ersten physischen Zellkennung A' (Physical Cell Identifier A', PCI A') definiert wird und wobei die zweite Zell-ID von einer zweiten globalen E-UTRAN Zellkennung (ECGI B) und einer zweiten physischen Zellkennung B' (PCI B') definiert wird.

6. Verfahren nach einem jeglichen der vorgenannten Ansprüche, wobei die Zelle eine Vielzahl von Leistungsverstärkern umfasst, wobei entweder die erste oder die zweite Zell-ID so konfiguriert ist, dass eine Anzahl N aus der Vielzahl von Leistungsverstärkern zum Betrieb der Zelle benutzt wird, während die andere der ersten und der zweiten Zell-ID so konfiguriert ist, dass eine Anzahl M aus der Vielzahl der Leistungsverstärker zum Betrieb der Zelle benutzt wird, wobei N ungleich M ist.

7. Verfahren nach einem jeglichen der vorgenannten Ansprüche, wobei der Schritt des Einstellens der Übertragung über die erste Zell-ID die Fortsetzung der Übertragung über die zweite Zell-ID umfasst.

8. Zelle (eNB1) zum Bedienen mindestens eines Benutzergeräts (UE1, UE2), wobei die Zelle umfasst:
- eine Antenne, die ausgelegt ist für das Betreiben der Zelle mit einer ersten Zell-ID, die einen ersten Satz von Übertragungsparametern definiert, und für das Bedienen mindestens eines Benutzergeräts;
- einen operativ an die Antenne gekoppelten Prozessor, der dafür ausgelegt ist, um an der Zelle die Übertragung im Namen der zweiten Zell-ID aufzunehmen, wobei die zweite Zell-ID einen zweiten Satz von Übertragungsparametern definiert, der sich vom ersten Satz unterscheidet, dergestalt, dass für einen Übergangszeitraum die erste Zell-ID und die zweite Zell-ID simultan betrieben werden;
- eine Steuerung für die Übergabe aller bzw. des mindestens einen Benutzergeräts von der ersten Zell-ID an die zweite Zell-ID;
- wobei der Prozessor weiterhin ausgestattet ist für das Einstellen der Übertragung mit der ersten Zell-ID, nachdem das mindestens eine Benutzergerät übergeben wurde.

9. Zelle nach Anspruch 8, weiterhin einen Schalter zum Umschalten des Zellbetriebs von der ersten Zell-ID auf die zweite Zell-ID.

10. Zelle nach Anspruch 8 oder 9, wobei die Zelle eine Vielzahl von Leistungsverstärkern umfasst, wobei entweder die erste oder die zweite Zell-ID so konfiguriert ist, dass eine Anzahl N aus der Vielzahl von Leistungsverstärkern zum Betrieb der Zelle benutzt wird, während die andere der ersten und der zweiten Zell-ID so konfiguriert ist, dass eine Anzahl M aus der Vielzahl der Leistungsverstärker zum Betrieb der Zelle benutzt wird, wobei N ungleich M ist.

11. Zelle nach einem jeglichen der Ansprüche 8 bis 10, wobei die Zelle von einem E-UTRAN-NodeB (eNB) gesteuert wird.

## Revendications

1. Procédé destiné à adapter des paramètres de transmission d'une cellule (eNB1), le procédé comprenant les étapes suivantes :
- exploiter la cellule (eNB1) avec un premier identifiant de cellule, définissant un premier jeu de paramètres de transmission, et desservant au moins un équipement utilisateur (UE1, UE2) ;
- démarrer la transmission au niveau de la cellule au nom d'un deuxième identifiant de cellule, le deuxième identifiant de cellule définissant un deuxième jeu de paramètres de transmission différent du premier jeu ;
- exploiter simultanément, pendant une période de transition (12), le premier identifiant de cellule et le deuxième identifiant de cellule ;
- transférer l'ensemble des équipements utilisateur (UE1, UE2) du premier identifiant de cellule au deuxième identifiant de cellule ;
- arrêter la transmission avec le premier identifiant de cellule après le transfert du ou des équipements utilisateur.

2. Procédé selon la revendication 1, dans lequel les paramètres de transmission de cellule comprennent un paramètre de couverture géographique et le deuxième identifiant de cellule représente une couverture géographique différente de celle du premier identifiant.

3. Procédé selon la revendication 2, dans lequel le procédé d'exploitation d'une cellule est un procédé destiné à adapter la couverture géographique d'une cellule.

4. Procédé selon l'une quelconque des revendications précédentes, dans lequel la cellule est contrôlée par un noeud B E-UTRAN, eNB.

5. Procédé selon l'une quelconque des revendications précédentes, dans lequel le premier identifiant de cellule est défini par un premier identifiant global de cellule E-UTRAN, ECGI A, et un premier identifiant de cellule physique A', PCI A', et le deuxième identifiant de cellule est défini par un deuxième identifiant global de cellule E-UTRAN, ECGI B, et un deuxième identifiant de cellule physique B', PCI B'.

6. Procédé selon l'une quelconque des revendications précédentes, dans lequel la cellule comprend une pluralité d'amplificateurs de puissance, dans lequel l'un des identifiants de cellule parmi le premier et le deuxième identifiants de cellule est configuré de sorte qu'un nombre N d'amplificateurs de la pluralité d'amplificateurs de puissance sont utilisés pour exploiter la cellule, tandis que l'autre identifiant de cellule parmi le premier et le deuxième identifiants de cellule est configuré de sorte qu'un nombre M d'amplificateurs de la pluralité d'amplificateurs de puissance sont utilisés pour exploiter la cellule, N étant différent de M.

7. Procédé selon l'une quelconque des revendications précédentes, dans lequel l'étape d'arrêt de la transmission par le biais du premier identifiant de cellule comprend la poursuite de la transmission par le biais du deuxième identifiant de cellule.

8. Cellule (eNB1) destinée à desservir au moins un équipement utilisateur (UE1, UE2), la cellule comprenant :
- une antenne prévue pour exploiter la cellule avec un premier identifiant de cellule, définissant un premier jeu de paramètres de transmission, et desservant le ou les équipements utilisateur ;
- un processeur connecté fonctionnellement à l'antenne et prévu pour démarrer la transmission au niveau de la cellule au nom d'un deuxième identifiant de cellule, le deuxième identifiant de cellule définissant un deuxième jeu de paramètres de transmission différent du premier jeu, de sorte que pendant une période de transition, le premier identifiant de cellule et le deuxième identifiant de cellule sont exploités simultanément ;
- un contrôleur prévu pour transférer l'ensemble des équipements utilisateur du premier identifiant de cellule au deuxième identifiant de cellule ;
- dans lequel le processeur est en outre prévu pour arrêter la transmission avec le premier identifiant de cellule après le transfert du ou des équipements utilisateur.

9. Cellule selon la revendication 8, comprenant en outre un commutateur pour basculer l'exploitation de la cellule du premier identifiant de cellule au deuxième identifiant de cellule.

10. Cellule selon la revendication 8 ou 9, la cellule comprenant une pluralité d'amplificateurs de puissance, dans laquelle l'un des identifiants de cellule parmi le premier et le deuxième identifiants de cellule est configuré de sorte qu'un nombre N d'amplificateurs de la pluralité d'amplificateurs de puissance sont utilisés pour exploiter la cellule, tandis que l'autre identifiant de cellule parmi le premier et le deuxième identifiants de cellule est configuré de sorte qu'un nombre M d'amplificateurs de la pluralité d'amplificateurs de puissance sont utilisés pour exploiter la cellule, N étant différent de M.

11. Cellule selon l'une quelconque des revendications 8 à 10, la cellule étant contrôlée par un noeud B E-UTRAN, eNB.
